# EUROPÄISCHE PATENTSCHRIFT

(11) **EP 3 789 159 B1**
(45) Veröffentlichungstag und Bekanntmachung des Hinweises auf die Patenterteilung: **06.12.2023**
(21) Anmeldenummer: 20192880.1
(22) Anmeldetag: 26.08.2020
(51) Int. Cl.: B23K 37/053

(54) **ROHRSCHWEISSVORRICHTUNG**
PIPE WELDING DEVICE
DISPOSITIF DE SOUDAGE DE TUYAUX

(30) Priorität: 27.08.2019 DE 102019122886
(43) Veröffentlichungstag der Anmeldung: 10.03.2021
(73) Patentinhaber: Bergader Privatkäserei GmbH, 83329 Waging a. See (DE)
(72) Erfinder: Wolfertstetter, Heinrich, 83349 Palling (DE); Baumgart, Michael, 83329 Waging a. See (DE)
(74) Vertreter: Behr, Wolfgang

(56) Entgegenhaltungen:
- WO-A1-2019/166689
- DE-A1-102018 121 407
- DE-T2- 69 924 328
- DE-U1-202012 000 825
- US-A- 3 509 302

## Beschreibung

Die vorliegende Erfindung betrifft eine Rohrschweißvorrichtung mit einem Drehteller, an welchem ein zu schweißender Rohrabschnitt ankoppelbar ist, und mit einem Motor zum Antreiben des Drehtellers. Sie betrifft außerdem ein Verfahren zum Schweißen eines Rohrabschnitts unter Verwendung einer solchen Vorrichtung.

Rohrabschnitte werden bisher im industriellen Alltag üblicherweise per Hand miteinander verschweißt, wobei das Schweißgerät entlang der um den Umfang des Rohres verlaufenden Schweißnaht geführt werden muss. Hierbei ist es allerdings schwierig, eine hohe Qualität der Schweißnaht zu erreichen. Weiterhin muss das Rohr in zwei um 180° zueinander gedrehten Positionen eingespannt werden, um eine umlaufende Schweißnaht zu erreichen.

Um diese Problematik zu umgehen, wurde bereits versucht, das Rohr auf einem Drehteller anzuordnen, um so durch Drehen des Rohres die Schweißnaht an einem feststehenden Schweißgerät entlang zu führen. Allerdings muss hierbei der MasseAnschluss des Schweißgerätes sowie der Formiergas-Anschluss am Rohr selbst befestigt werden, was die Bedienung erschwert. Zudem ergibt sich durch das Feststehende Schweißgerät aufgrund von üblicherweise vorhandenen Verformungen des Rohres oder einer nicht exakten axialen Ausrichtung auch keine saubere Schweißnaht.

Eine Rohrschweißvorrichtung gemäß dem Oberbegriff von Anspruch 1 ist aus Druckschrift DE 699 24 328 T2 bekannt. Druckschriften DE 10 2018 121407 A1, US 3 509 302 A und DE 20 2012 000825 U1 zeigen weitere Rohrschweißvorrichtungen. Aufgabe der vorliegenden Erfindung ist es daher, eine verbesserte Rohrschweißvorrichtung zur Verfügung zu stellen. Insbesondere soll es die Rohrschweißvorrichtung ermöglichen, Rohrabschnitte mit hoher Qualität und/oder verringertem Aufwand miteinander zu verschweißen.

Diese Aufgabe wird erfindungsgemäß durch eine Rohrschweißvorrichtung gemäß Anspruch 1 sowie ein Verfahren nach Anspruch 14 gelöst.

Bevorzugte Ausgestaltungen der vorliegenden Erfindung sind Gegenstand der Unteransprüche.

Die vorliegende Erfindung umfasst eine Rohrschweißvorrichtung mit einem Drehteller, an welchem ein zu schweißender Rohrabschnitt ankoppelbar ist, und mit einem Motor zum Antreiben des Drehtellers. Die Rohrschweißvorrichtung weist weiterhin einen Masseanschluss auf, welcher über einen Dreh-Abgriff mit dem Drehteller in Verbindung steht.

Hierdurch kann die Masseklemme des Schweißgerätes mit dem bevorzug an einem stationären Element der Rohrschweißvorrichtung angeordneten Masseanschluss problemlos verbunden werden, während die elektrische Verbindung mit dem Rohrabschnitt über den Drehabgriff und den Drehteller erfolgt. Hierdurch ist eine erheblich vereinfachte Handhabung möglich. Weiterhin ergibt sich durch das Drehen des Rohrabschnittes mittels des Drehtellers eine qualitativ verbesserte und erheblich einfacher herzustellende Schweißnaht gegenüber einer Verschweißung per Hand.

In einer Ausgestaltung der vorliegenden Erfindung ist der Drehteller über eine Welle drehbar gelagert, wobei die Welle mit dem Motor gekoppelt ist und von diesem angetrieben wird.

In einer möglichen Ausgestaltung umfasst der Masseanschluss eine Anschlussplatte, an welcher eine Masseklemme des Schweißgerätes anklemmbar ist. Die Anschlussplatte steht bevorzugt über den Drehabgriff mit dem Drehteller in Verbindung.

In einer bevorzugten Ausgestaltung der vorliegenden Erfindung steht der Drehabgriff über die Welle mit dem Drehteller elektrisch leitend in Verbindung. Die Welle dient daher nicht nur zum Antrieb des Drehtellers, sondern auch zur elektrischen Verbindung mit dem Drehangriff.

Bevorzugt ist der Rohrabschnitt so an den Drehteller ankoppelbar, dass die Kopplung nicht nur eine mechanische Verbindung herstellt, sondern gleichzeitig auch eine elektrische Verbindung.

Bevorzugt bestehen der Drehteller und/oder die Welle aus einem elektrisch leitfähigen Material, beispielsweise aus Metall und insbesondere aus Stahl.

In einer möglichen Ausgestaltung der vorliegenden Erfindung umfasst der Drehabgriff einen an der Welle angeordneten, mit der Welle mitdrehenden Kontaktbereich, welcher mit einem an einem Gleitkontakt zusammenwirkt. Bei dem mit der Welle mitdrehenden Kontaktbereich kann es sich insbesondere um eine an der Welle angeordnete Scheibe handeln. Die Scheibe besteht bevorzugt aus einem leitfähigen Material, insbesondere einem Metall. Der Gleitkontakt ist bevorzugt an einem stationären Element der Rohrschweißvorrichtung angeordnet.

In einer möglichen Ausgestaltung der vorliegenden Erfindung ist der Gleitkontakt federbelastet. Beispielsweise kann es sich bei dem Gleitkontakt um einen Kohlegleiter handeln.

Wird als Masseanschluss eine Anschlussplatte eingesetzt, so kann der Gleitkontakt an und/oder in der Anschlussplatte angeordnet sein, und insbesondere in der Anschlussplatte federbelastet verschiebbar sein. In einer möglichen Ausgestaltung ist der Gleitkontakt dabei in der Ebene der Anschlussplatte federbelastet verschiebbar.

In einer möglichen Ausgestaltung der vorliegenden Erfindung sind mehrere Gleitkontakte vorgesehen, um die übertragbare Stromstärke zu erhöhen.

Erfindungsgemäß weist der Drehteller eine Formiergas- und/oder Vakuum-Öffnung auf, über welche das Innere eines mit dem Drehteller gekoppelten Rohrabschnitts mit Formiergas und/oder Vakuum beaufschlagbar ist. Durch das Formiergas und/oder Vakuum wird ein Verkokeln der Schweißnaht im Inneren des Rohres vermieden, indem eine Oxidation verhindert wird. Hierdurch können auch Edelstahlrohe verschweißt werden. Durch die Formiergas- und/oder Vakuum-Öffnung des Drehtellers wird das Formiergas bzw. Vakuum erfindungsgemäß über die Rohrschweißvorrichtung zur Verfügung gestellt, und muss nicht mehr separat vorgesehen sein.

Wird anstelle von Formiergas Vakuum eingesetzt, hat dies den zusätzlichen Vorteil, dass durch das Vakuum der Rohrabschnitt am Drehteller gehalten wird. In möglichen Ausgestaltungen der vorliegenden Erfindung reicht dies zur Kopplung zwischen Rohrabschnitt und Drehteller. Alternativ kann das Vakuum für eine erste Fixierung des Rohrabschnitts am Drehteller sorgen, welche durch eine mechanische Kopplung unterstützt wird.

Die Rohrschweißvorrichtung kann weiterhin einen Deckel umfassen, mit welchem das dem Drehteller entgegengesetzte Ende des Rohrabschnittes zumindest teilweise verschlossen wird. Wird Formiergas eingesetzt, so weist der Deckel bevorzugt eine Öffnung auf, durch welche zu Beginn des Vorgangs im Rohrabschnitt befindliche Luft entweichen kann. Wird Vakuum eingesetzt, verschließt der Deckel den Rohrabschnitt bevorzugt dichtend.

In einer bevorzugten Ausgestaltung umfasst die Rohrschweißvorrichtung eine Drehdurchführung, über welche die Formiergas- und/oder Vakuumöffnung des Drehtellers mit einer Formiergas- und/oder Vakuumquelle verbindbar ist. Dies erleichtert die Verbindung mit der Formiergas- und/oder Vakuumöffnung, da die Formiergas- und/oder Vakuumquelle nicht mehr mit dem Drehteller bzw. Rohrabschnitt mitdrehen muss.

Insbesondere erfolgt die Verbindung mit der Formiergas- und/oder Vakuumquelle über einen Formiergas- und/oder Vakuumanschluss der Rohrschweißvorrichtung. Bevorzugt ist dieser an einem statischen Element der Rohrschweißvorrichtung angeordnet. Über einen Formiergas-Anschluss kann beispielsweise eine Druckflasche mit Formiergas angeschlossen werden. Über einen Vakuumanschluss kann beispielsweise eine Vakuumpumpe angeschlossen werden. Diese kann ebenfalls Bestandteil der Rohrschweißvorrichtung sein.

In einer bevorzugten Ausgestaltung ist der Drehteller über eine Welle drehbar gelagert, wobei die Drehdurchführung über eine sich axial durch die Welle erstreckende Bohrung mit der Formiergas- und/oder Vakuumöffnung des Drehtellers in Verbindung steht. Die Welle dient damit gleichzeitig der Führung des Formiergases und/oder Vakuums, und bildet zusammen mit einem an einem Stator der Rohrschweißvorrichtung angeordneten Element die Drehdurchführung.

Insbesondere kann die Drehdurchführung in einem Lagerblock der Welle vorgesehen sein. Insbesondere kann die Welle dabei zweiseitig gedichtet in dem Lagerblock gelagert sein, und die Drehdurchführung zwischen den beiden Dichtungen angeordnet sein.

In einer möglichen Ausgestaltung der vorliegenden Erfindung umfasst die Rohrschweißvorrichtung einen an den Drehteller anordenbaren oder den Drehteller bildenden, auswechselbaren Adapter zum Ankoppeln eines Rohrabschnittes. Hierdurch kann die Rohrschweißvorrichtung problemlos an unterschiedliche Rohre, insbesondere Rohre mit unterschiedlichem Durchmesser, angepasst werden. Insbesondere kann der Adapter dabei den Drehteller bilden und lösbar mit der Welle verbindbar sein, beispielsweise durch eine Verschraubung.

In einer bevorzugten Ausgestaltung ist der Adapter mit einem Flansch des Rohrabschnittes verschraubbar. Wird kein Adapter eingesetzt, so ist bevorzugt der Drehteller mit einem Flansch des Rohrabschnitts verschraubbar.

Die erfindungsgemäß eingesetzte Form des Drehtellers ist zunächst einmal beliebig. Der Drehteller muss lediglich ein Ankoppeln mit dem Rohrabschnitt erlauben, und muss daher erfindungsgemäß auch nicht notwendigerweise tellerförmig sein.

Bevorzugt ist der Drehteller jedoch tellerförmig, um ein Verschrauben mit dem Flansch des Rohrabschnittes zu vereinfachen. Insbesondere hintergreift dabei eine Schraubhülse den Drehteller.

In einer möglichen Ausgestaltung der vorliegenden Erfindung umfasst die Rohrschweißvorrichtung eine Steuerung zur Ansteuerung des Motors, über welche die Drehbewegung des Drehtellers ansteuerbar ist. Insbesondere kann die Steuerung dabei einen Inverter umfassen, über welchen der Motor angesteuert wird.

Bevorzugt ist über die Steuerung eine Drehgeschwindigkeit des Drehtellers schrittweise und/oder stufenlos einstellbar. Durch die Drehgeschwindigkeit wird die Schweißgüte der Schweißnaht festgelegt. Weiterhin kann hierdurch die Rohrschweißvorrichtung an unterschiedliche Durchmesser des zu schweißenden Rohres angepasst werden.

In einer möglichen Ausgestaltung der vorliegenden Erfindung ist ein Fuß- und/oder Hand-Eingabegerät zum Bedienen der Steuerung vorgesehen. Insbesondere kann es sich dabei um ein Fußgas und/oder Handgas handeln, über welches die Drehbewegung des Drehtellers ein- und ausschaltbar und/oder die Drehgeschwindigkeit ansteuerbar ist.

Alternativ oder zusätzlich kann die Steuerung mehrere auswählbare Schweißprogramme umfassen. Ein Schweißprogramm kann dabei beispielsweise eine definierte Drehgeschwindigkeit vorsehen.

In einer möglichen Ausgestaltung der vorliegenden Erfindung ist die Steuerung so ausgestaltet, dass sie in zumindest einem Betriebsmodus den Drehteller zur Durchführung eines Schweißvorgangs um einen definierten Winkelbereich dreht. Insbesondere kann die Steuerung dabei den Drehteller um mehr als 360° drehen, um eine umlaufende, sich leicht überlappende Schweißnaht zu erzeugen, und die Drehbewegung sodann stoppen. Hierdurch wird die automatisierte Herstellung einer Schweißnaht möglich.

Bevorzugt steht die Steuerung mit einem Drehgeber in Verbindung, welcher eine Drehstellung des Drehtellers erfasst. Hierdurch kann der definierte Winkelbereich abgefahren werden.

In einer möglichen Ausgestaltung der vorliegenden Erfindung ist die Steuerung so ausgestaltet, dass sie ein mit der Rohrschweißvorrichtung zusammenwirkendes Schweißgerät ansteuern kann, und hierdurch insbesondere nach Beendigung des Schweißvorgangs das Schweißgerät stoppt.

Insbesondere kann die Steuerung der Rohrschweißvorrichtung ein Interface zur Verbindung mit dem Schweißgerät aufweisen, über welches dieses angesteuert wird.

Der Motor der Rohrschweißvorrichtung umfasst bevorzugt ein Getriebe, über welches die Welle des Drehtellers angetrieben wird.

Die Lagerung der Welle, die Drehdurchführung für das Formiergas und/oder Vakuum, und/oder der Drehabgriff sind bevorzugt an einer Stelle der Welle angeordnet, welche zwischen dem Drehteller und der Verbindung mit dem Getriebe und/oder dem Motor liegt.

Die Anordnung aus Drehteller, Motor und Drehabgriff kann erfindungsgemäß ein Modul bilden. Dieses kann in einer ersten Ausgestaltung als solches eingesetzt werden, um beispielsweise auf einer Baustelle zum Verschweißen von Rohrabschnitten eingesetzt zu werden.

In einer möglichen ersten Anwendung wird der Schweißkopf des Schweißgerätes dabei manuell an der zu erzeugenden Schweißnaht angeordnet, und der Rohrabschnitt durch den Drehteller und den Motor an dem manuell gehaltenen Schweißgerät entlang geführt. Durch den erfindungsgemäßen Drehabgriff ist die Masseklemme des Schweißgerätes hierdurch problemlos mit der Rohrschweißvorrichtung verbindbar und kann insbesondere an einem stationären Element der Rohrschweißvorrichtung angeklemmt werden. Hierdurch ergibt sich bereits ein erheblich vereinfachter Schweißvorgang und eine gegenüber einem komplett manuellen Schweißen, bei welchem das Schweißgerät entlang der Schweißnaht geführt wird, deutlich verbesserte Schweißnaht.

In einer möglichen Ausgestaltung der vorliegenden Erfindung umfasst die Rohrschweißvorrichtung ein Gleitelement, welches an einen Schweißkopf eines mit der Rohrschweißvorrichtung zusammenwirkenden Schweißgerätes befestigbar ist und auf dem Rohrabschnitt gleitet, um den Schweißkopf in einem definierten Abstand zur Oberfläche des Rohrabschnitts zu halten. Insbesondere kann das Gleitelement dabei an einer Brenndüse des Schweißkopfes angeordnet werden und hält die Schwei-ßelektrode in einem definierten Abstand zur Oberfläche des Rohrabschnitts.

Bei dem Gleitelement kann es sich um eine Hülse handeln, welche am Schweißkopf befestigt wird und mit ihrer Vorderkante einen definierten Abstand des Schweißkopfes zur Oberfläche des Rohrabschnittes sicherstellt. Insbesondere kann die Hülse die Schweißdüse des Schweißkopfes umgreifen und beispielsweise durch Klemmung und/oder Formschluss auf dieser gehalten werden.

Durch das Gleitelement und die hierdurch bereitgestellte definierte Abstandsbeziehung zwischen Schweißkopf und Oberfläche des Rohrabschnittes kann die Qualität der Verschweißung erheblich verbessert werden.

Ein solches Gleitelement kann zunächst eingesetzt werden, wenn der Schweißkopf des Schweißgerätes manuell am Rohrabschnitt gehalten wird. Das Gleitelement kann jedoch auch dann zum Einsatz kommen, wenn wie im Folgenden beschrieben eine Portalanlage zum Halten des Schweißkopfes eingesetzt wird.

In einer möglichen Ausgestaltung der vorliegenden Erfindung umfasst die Rohrschweißvorrichtung eine Portalanlage mit einem Halter für einen Schweißkopf, wobei die Position des Halters relativ zum Drehteller einstellbar ist. Durch den Halter kann der Schweißkopf damit an der gewünschten Stelle des Rohrabschnitts platziert werden, um dort eine Schweißnaht zu erzeugen.

Bevorzugt ist der Halter federnd gelagert, und spannt den Schweißkopf gegen einen am Drehteller angekoppelten Rohrabschnitt vor. Insbesondere wenn ein erfindungsgemäßes Gleitelement eingesetzt wird, sorgt die federnde Lagerung des Halters damit dafür, dass das Gleitelement an der Oberfläche des Rohrabschnittes anliegt. Hierdurch wird ein definierter Abstand zwischen Schweißkopf und Oberfläche des Rohrabschnittes sichergestellt, und zwar auch dann, wenn der Rohrabschnitt unrund ist oder leicht schräg am Drehteller angeordnet wurde.

Der Halter kann beispielsweise federnd an einer Linearführung angeordnet sein, an welche er gegen den Rohrabschnitt vorgespannt ist, um den daran angeordneten Schweißkopf gegen den Rohrabschnitt drücken.

Durch die federnde Lagerung des Halters wird dieser bevorzugt in einer Ebene, welche senkrecht auf der Drehachse des Drehtellers steht, gegen den Rohrabschnitt vorgespannt.

In einer möglichen Ausgestaltung der möglichen Erfindung ist der Halter an der Portalanlage an einer Führung in axialer Richtung des Drehtellers verschiebbar angeordnet. Hierdurch kann der Halter an unterschiedlichen axialen Positionen des Rohrabschnittes angeordnet werden. Bevorzugt kann der Halter dabei in der jeweils gewünschten axialen Position festgelegt werden, beispielsweise indem er mit der Führung verspannt wird.

In einer möglichen Ausgestaltung umfasst die Portalanlage eine höhenverstellbare Ablage, welche ein dem Drehteller abgewandtes Ende des Rohrabschnitts stützt. Hierdurch können auch längere Rohrabschnitte sicher geschweißt werden.

Die erfindungsgemäße Rohrschweißvorrichtung wird bevorzugt zusammen mit einem Lichtbogenschweißgerät eingesetzt. Lichtbogenschweißgeräte erlauben die Herstellung besonders hochwertiger Schweißnähte. Insbesondere kann ein Lichtbogenschweißgerät zum Schutzgasschweißen, insbesondere mit einer nicht-abschmelzenden Elektrode zum Einsatz kommen. Insbesondere kann ein Lichtbogenschweißgerät zum Wolfram-Intergasschweißen eingesetzt werden.

Die vorliegende Erfindung umfasst weiterhin ein Set aus einer Rohrschweißvorrichtung, wie sie oben beschrieben wurde, und einem Schweißgerät. Insbesondere kann es sich bei dem Schweißgerät um ein Lichtbogenschweißgerät handeln, insbesondere um ein Lichtbogenschweißgerät mit einer nicht-abschmelzenden Elektrode.

Die Rohrschweißvorrichtung kann jedoch auch unabhängig von dem Schweißgerät verkauft und mit bereits vorhandenen Schweißgeräten eingesetzt werden.

Das Schweißgerät kann in einer ersten Ausgestaltung lediglich über seine Masseklemme mit dem Masseanschluss der Rohrschweißvorrichtung verbunden, und ansonsten manuell bedient werden. Alternativ kann, weist die Rohrschweißvorrichtung eine Portalanlage auf, der Schweißkopf des Schweißgerätes am Halter befestigt und über diesen relativ zum Rohrabschnitt positioniert werden. Die Ansteuerung des Schweißgerätes kann entweder über den Benutzer, oder über eine Steuerung der Rohrschweißvorrichtung erfolgen.

Die vorliegende Erfindung umfasst weiterhin ein Verfahren zum Schweißen eines Rohrabschnitts unter Verwendung einer Rohrschweißvorrichtung, wie sie oben beschrieben wurde, und einem Schweißgerät, mit den Schritten:
- Koppeln des Rohrabschnitts an den Drehteller;
- Verbinden der Masse des Schweißgerätes mit dem Masseanschluss;
- Positionieren eines Schweißkopfes des Schweißgerätes relativ zum Rohrabschnitt und
- Drehen des Rohrabschnitts mittels des Motors, während mittels des Schweißkopfes eine sich in Umfangsrichtung des Rohrabschnitts erstreckende Schweißnaht erzeugt wird.

Im Rahmen des erfindungsgemäßen Verfahrens ist es zunächst ohne Bedeutung, in welcher Reihenfolge die drei Schritte des Koppelns, Verbindens und Positionierens, welche zur Vorbereitung der Erzeugung der Schweißnaht dienen, durchgeführt werden. Bevorzugt erfolgt jedoch das Positionieren des Schweißkopfes, nachdem der Rohrabschnitt mit dem Drehteller gekoppelt wurde.

Als Schweißgerät wird bevorzugt ein Lichtbogen-Schweißgerät eingesetzt.

Das erfindungsgemäße Verfahren dient bevorzugt zum Verschweißen zweier in axialer Richtung aneinander anschließender Rohrelemente mittels einer sich um den gesamten Umfang des Rohrabschnitts erstreckenden Schweißnaht.

In einer möglichen Ausgestaltung der vorliegenden Erfindung können die beiden Rohrelemente vorab durch Schweißpunkte aneinander geheftet werden. Der so erzeugte Rohrabschnitt kann dann durch das erfindungsgemäße Verfahren geschweißt werden, indem entlang der Kontaktlinie der beiden Rohrelemente eine umlaufende Schweißnaht, welche die beiden Rohrelemente miteinander verbindet, erzeugt wird.

Bevorzugt erfolgt das erfindungsgemäße Verfahren dabei so, wie dies bereits oben im Hinblick auf die Vorrichtung beschrieben wurde. Insbesondere wird dabei der Rohrabschnitt bevorzugt um mehr als 360° an den Schweißkopf vorbeigedreht, um eine umlaufende Schweißnaht mit einem zumindest geringen Überlapp zu erzeugen.

Die vorliegende Erfindung wird nun anhand von Ausführungsbeispielen sowie Zeichnungen näher beschrieben.

Dabei zeigen:
- Fig. 1:: ein erstes Ausführungsbeispiel einer erfindungsgemäßen Schweißvorrichtung in einer Prinzipdarstellung,
- Fig. 2:: ein konkretes Ausführungsbeispiel einer erfindungsgemäßen Schweißvorrichtung in einer perspektivischen Gesamtansicht,
- Fig. 3:: eine Detailansicht des in Figur 2 gezeigten Ausführungsbeispiels, in welcher Gehäuseelemente entfernt wurden,
- Fig. 4:: eine weitere Detailansicht des in Fig. 2 gezeigten Ausführungsbeispiels, wobei Gehäuseelemente entfernt wurden, wobei die Schweißvorrichtung zur Durchführung eines erfindungsgemäßen Verfahrens eingesetzt wird, und
- Fig. 5:: eine weitere Detailansicht eines erfindungsgemäßen Halters für einen Schweißkopf zur Durchführung des erfindungsgemäßen Verfahrens.

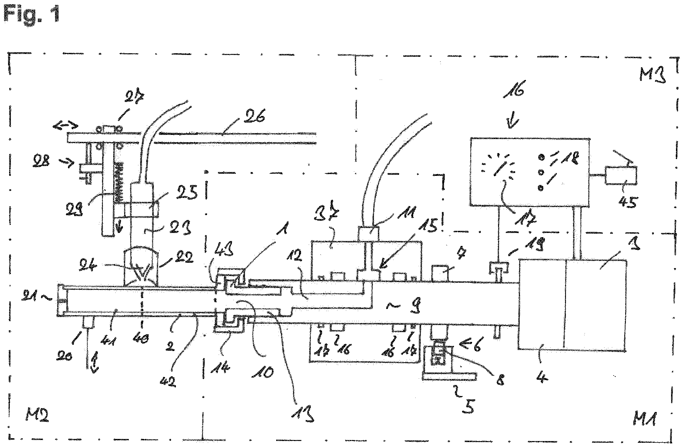

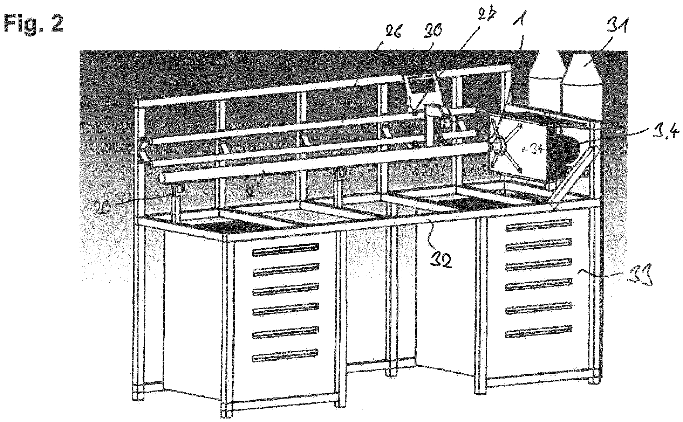

Figur 1 zeigt ein Ausführungsbeispiel einer erfindungsgemäßen Rohrschweißvorrichtung in einer Prinzipdarstellung. Figuren 2 bis 5 zeigen ein mit dem grundlegenden Aufbau in Fig. 1 weitergehend übereinstimmendes Ausführungsbeispiel in einer konkreten Umsetzung. Im Folgenden werden die beiden Ausführungsbeispiele daher gemeinsam beschrieben.

Die Ausführungsbeispiele der Rohrschweißvorrichtung umfassen einen Drehteller 1, an welchem ein zu schweißender Rohrabschnitt 2 ankoppelbar ist, sowie einen Motor 3 zum Antreiben des Drehtellers. Weiterhin ist ein Masseanschluss 5 vorgesehen, welcher über einen Drehabgriff 6 mit dem Drehteller 1 in Verbindung steht.

An dem Masseanschluss 5 kann daher die Masse eines Schweißgerätes, mit welchem der Rohrabschnitt 2 geschweißt wird, angeschlossen werden, und steht so über den Drehabgriff 2 und den Drehteller 1 mit dem Rohrabschnitt 2 elektrisch leitend in Verbindung.

Die Rohrschweißvorrichtung umfasst im Ausführungsbeispiel eine drehbar gelagerte Achse 9, an welcher der Drehteller 1 angeordnet ist. Die Welle 9 wird über den Motor 3 angetrieben, wobei im Ausführungsbeispiel ein Getriebe 4 vorgesehen ist, über welches der Motor 3 mit der Welle 9 in Verbindung steht.

Im Ausführungsbeispiel dient die Welle 9 auch der elektrischen Verbindung zwischen dem Drehteller 1 und den Drehabgriff 6. Insbesondere ist der Drehabgriff 6 dabei an der Welle 9 angeordnet und umfasst einen mit der Welle mitdrehenden Kontaktbereich 7, an welchem ein Gleitkontakt 6 gleitend anliegt, um die elektrische Verbindung zu dem Masseanschluss 5 herzustellen. Der Masseanschluss 5 und der Gleitkontakt sind an einem statischen Element der Rohrschweißvorrichtung angeordnet.

Im Ausführungsbeispiel wird der Kontaktbereich über eine Ringscheibe 7 zur Verfügung gestellt, welche an der Welle 9 befestigt ist. Alternativ könnte auch die Oberfläche der Welle selbst kontaktiert werden. Der Gleitkontakt ist federbelastet und wird hierdurch gegen den Kontaktbereich gedrückt. Im Ausführungsbeispiel wird dabei insbesondere ein Kohlegleiter eingesetzt.

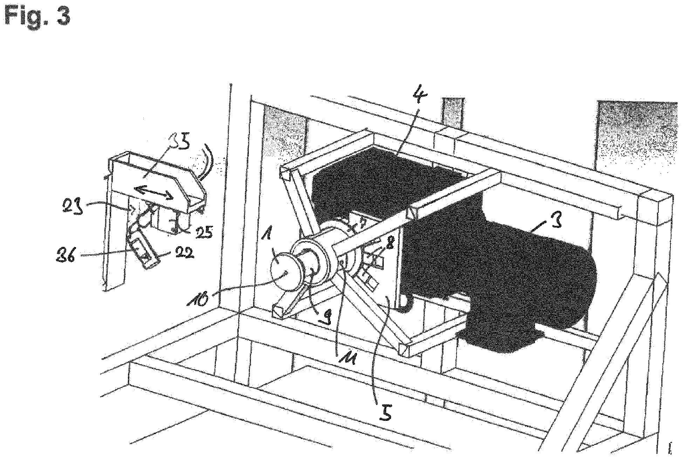

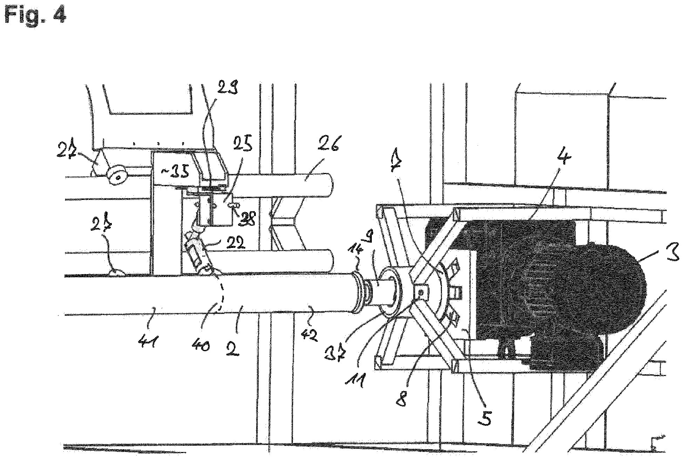

Der Masseanschluss 5 ist als eine Anschlussplatte ausgeführt, an welcher eine Masseklemme eines konventionellen Schweißgerätes anklemmbar ist. Bei dem in Figur 1 gezeigten Ausführungsbeispiel ist die Anschlussplatte 5 als ein separates Element zu einer Lagerung für den Gleitkontakt 8 ausgeführt. Bei der Ausgestaltung, wie sie beispielsweise in Figuren 3 und 4 näher dargestellt ist, ist der Gleitkontakt 8 dagegen unmittelbar an der Anschlussplatte 5 angeordnet. Insbesondere umfasst die Anschlussplatte eine Aussparung, in welcher der Gleitkontakt verschiebbar gelagert ist.

Die Anschlussplatte 5 erstreckt sich bei dieser Ausgestaltung in einer Ebene senkrecht zur Drehrichtung der Welle, wobei der Gleitkontakt 8 in der Ebene dieser Platte federbelastet verschiebbar ist.

Bei dem in Figuren 3 und 4 näher dargestellten Ausführungsbeispiel sind mehrere, konkret drei Kontakte vorgesehen, um die übertragbaren Stromstärken zu erhöhen.

Der Drehabgriff erlaubt bevorzugt die Übertragung von Schweißströmen von mehr als 100 Ampere, insbesondere von mehr als 200 Ampere.

Bei den gezeigten Ausführungsbeispielen ist der Drehabgriff 6 an der Welle in einem Bereich zwischen dem Drehteller 1 und dem Motor 3 angeordnet. Weiterhin koppelt das dem Drehteller entgegengesetzte Ende der Welle unmittelbar mit einer Ausgangswelle des Getriebes 4.

Diese Anordnung ist jedoch nicht zwingend. Beispielsweise könnte der Motor bzw. das Getriebe auch über ein auf der Welle angeordnetes Zahnrad oder eine auf der Welle angeordnete Riemenscheibe mit dem Motor oder dem Getriebe in Verbindung stehen. Diese Verbindung mit dem Motor oder Getriebe könnte auch zwischen dem Drehteller und dem Drehabgriff an der Welle angeordnet sein.

Im Ausführungsbeispiel ist die Welle 9 an einem Lagerblock 37 drehbar gelagert. Hierfür sind Drehlager 16 vorgesehen.

Motor 3, Getriebe 4 und Drehabgriff 6 sind wie in Figur 2 gezeigt bevorzugt innerhalb eines Gehäuses 34 angeordnet. Der Lagerblock 37 kann im Bereich einer Außenwand des Gehäuses angeordnet sein.

Im Ausführungsbeispiel ist der Drehteller 1 als ein Adapter ausgeführt, welcher über eine Verschraubung 13 lösbar mit der Welle 9 verbindbar ist. Hierdurch kann der jeweilige Drehteller an das zu schweißende Rohr angepasst werden. Der Drehteller ist im Ausführungsbeispiel mit einem Flanschabschnitt 34 des Rohrabschnitts verschraubbar. Hierfür ist eine Schraubmuffe 14 vorgesehen, welche den Drehteller 1 hintergreift, und mit einem Gewinde am Außenumfang des Flanschabschnittes 43 zusammenwirkt. Die mechanische Kopplung zwischen dem Rohrabschnitt und dem Drehteller 1 könnte jedoch auch auf andere Weise erfolgen. Weiterhin könnte der Drehteller 1 auch fest mit der Welle 9 verbunden sein.

Die Rohrschweißvorrichtung umfasst weiterhin eine im Drehteller 1 angeordnete Formiergas- und/oder Vakuum-Öffnung 10, welche es erlaubt, das Innere des Rohrabschnitts 2 mit Formiergas und/oder Vakuum zu beaufschlagen. Die Formiergas-und/oder Vakuum-Öffnung 10 steht über eine axial durch die Welle 9 verlaufende Bohrung 12 und eine Drehdurchführung 15 mit einer Formiergas- und/oder Vakuumquelle in Verbindung. Hierfür ist ein Formiergas- und/oder Vakuum-Anschluss 11 vorgesehen, welcher die Drehdurchführung 15 mit der Formiergas- und/oder Vakuumquelle verbindet.

Bei dem in Figuren 2 bis 5 dargestellten Ausführungsbeispiel ist eine Gasflasche 31 vorgesehen, in welcher das Formiergas bereitgestellt wird. Die andere Gasflasche kann das Schutzgas zum Schweißen bereitstellen. Die Gasflasche 31 steht über einen Schlauch mit dem Formiergasanschluss 11 der Rohrschweißvorrichtung in Verbindung.

Der Formiergas-Anschluss ist an einem stationären Teil der Rohrschweißvorrichtung angeordnet und steht über die Drehdurchführung mit der im Drehteller angeordneten Formiergas-Öffnung in Verbindung.

Im Ausführungsbeispiel ist die Drehdurchführung 15 im Bereich der Lagerung der Welle 9 angeordnet, und insbesondere in den Lagerblock 37 integriert. Insbesondere wird dabei die in axialer Richtung verlaufende Bohrung 12 in einem Bereich innerhalb des Lagerblocks 37 in radialer Richtung nach außen geführt, und steht dort mit einem zum Formiergas- und/oder Vakuum-Anschluss 11 führenden Kanal in Verbindung. Der Außenumfang der Welle oder der Innenumfang des Lagerblocks weist in diesem Bereich bevorzugt einen in Umfangsrichtung verlaufenden Nutabschnitt auf, um die fluidische Verbindung in jeder Drehstellung der Welle 9 sicherzustellen.

Die Drehdurchführung ist bevorzugt gasdicht ausgeführt. Im Ausführungsbeispiel erfolgt die Abdichtung der Drehdurchführung über Dichtungen 17 zwischen der Welle 9 und dem Lagerblock 37, welche beidseitig der Drehdurchführung angeordnet sind.

Weiterhin ist ein Deckel 21 vorgesehen, welcher mit dem dem Drehteller 1 gegenüberliegenden Ende des Rohrabschnitts 2 verbunden wird. Im Ausführungsbeispiel weist dieser eine Öffnung auf, um im Rohrabschnitt vorhandene Luft entweichen zu lassen. Wird anstelle von Formiergas Vakuum eingesetzt, dichtet der Deckel den Rohrabschnitt dagegen bevorzugt ab.

Der Drehteller, der Motor, der Masseanschluss und der Drehabgriff, sowie gegebenenfalls die weiteren Komponenten wie die Welle, die Lagerung der Welle, die Drehdurchführung und der Formiergasanschluss bilden in einer möglichen Ausgestaltung der vorliegenden Erfindung ein erstes Modul M1, welches auch unabhängig von den im Folgenden beschriebenen weiteren Modulen eingesetzt werden kann, beispielsweise um auf einer Baustelle eine Verschweißung von Rohrelementen zu ermöglichen. Der Schweißkopf eines Schweißgerätes kann in diesem Fall manuell an der gewünschten Schweißnaht platziert werden, wobei die zu verschweißende Trennfuge durch Betätigung des Motors am manuell stationär gehaltenen Schweißkopf entlang geführt wird.

Das Modul M1 kann jedoch auch in Kombination mit einer Portalanlage, welche ein Modul M2 bildet, eingesetzt werden. In einer möglichen Ausgestaltung ist das Modul M1 dabei lösbar mit dem Modul M2 verbindbar, um sowohl eigenständig als auch in Kombination mit dem Modul M2 eingesetzt zu werden.

Unabhängig davon, ob das Modul M1 zusammen mit der Portalanlage oder mit einem manuell gehaltenen Schweißkopf eingesetzt wird, wird im Rahmen des Ausführungsbeispiels ein Gleitelement 22 eingesetzt, welches an dem Schweißkopf 23 eines mit der Rohrschweißvorrichtung zusammenwirkenden Schweißgerätes befestigt wird und auf dem Rohrabschnitt 2 gleitet, um den Schweißkopf in einem definierten Abstand zur Oberfläche des Rohrabschnitts zu halten.

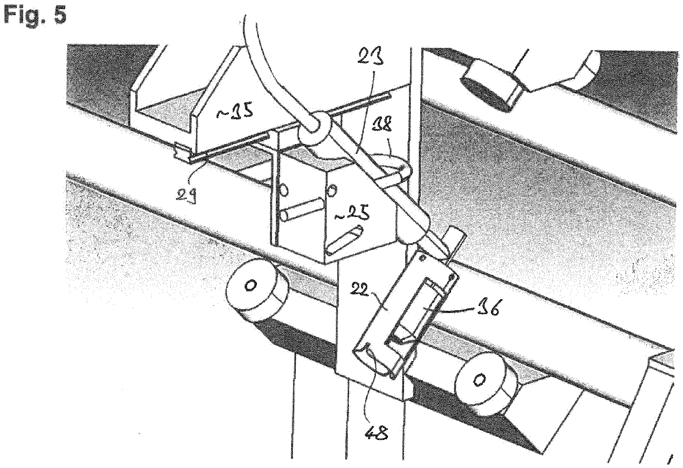

Das Gleitelement 22, welches besonders gut in Figur 5 erkennbar ist, wird dabei bevorzugt mit der Schweißdüse 36 des Schweißkopfes 23 verbunden, und hält die in Figur 1 schematisch eingezeichnete Elektrode 24 des Schweißkopfes in einem definierten Abstand zur Oberfläche des Rohrabschnitts 2.

Insbesondere kann das Gleitelement 22 als eine Hülse ausgebildet werden, welche um die Schweißdüse 36 herum angeordnet wird, und insbesondere auf diese aufgeklemmt wird. Die Vorderkante der Hülse liegt dann auf dem Rohrabschnitt auf, sodass die Hülse mit dieser Vorderkante bei einer Drehung des Drehtellers auf der Oberfläche des Rohrelementes entlang gleitet.

Wie im Ausführungsbeispiel ersichtlich, weist die Hülse bevorzugt seitliche Öffnungen auf, durch welche Hitze und Schutzgas entweichen können.

Die Hülse weist bevorzugt eine Markierung 48 an ihrer Vorderkante auf, beispielsweise in Form eines kleinen Einschnittes, durch welchen die Hülse relativ zu der Trennfuge, welche verschweißt werden soll, positioniert werden kann. Bevorzugt sind dabei auf in Umfangsrichtung gegenüberliegenden Seiten der Vorderkante der Hülse Markierungen vorgesehen, sodass die von der Hülse gehaltene Elektrode 24 des Schweißkopfes über der Trennfuge 40 angeordnet ist, wenn beide Markierungen sich auf der Trennfuge befinden. Die Markierungen werden beim Aufschieben der Hülse auf die Schweißdüse 36 hierfür bevorzugt so angeordnet, dass sie sich in einer Ebene befinden, welche orthogonal zu der Drehachse des Drehtellers verläuft und die Spitze der Elektrode 24 schneidet.

Die das zweite Modul M2 bildende Portalanlage umfasst einen Halter 25 für den Schweißkopf 23. Die Position des Halters relativ zum Drehteller ist einstellbar, um den Schweißkopf an der richtigen Position relativ zu dem Rohrelement anzuordnen.

Im Ausführungsbeispiel ist eine Linearführung 26 vorgesehen, welche parallel zur Drehachse des Drehtellers 1 verläuft, und entlang welcher der Halter 25 verschiebbar ist. Hierdurch kann der am Halter angeordnete Schweißkopf in der gewünschten Axialposition und insbesondere auf Höhe der gewünschten Schweißnaht 40 angeordnet werden. Der Halter ist bevorzugt in der gewünschten axialen Position festlegbar. Im Ausführungsbeispiel ist hierfür ein Klemmelement 28 vorgesehen, über welches der Halter mit der Linearführung in der gewünschten Position verspannt werden kann.

Die konkrete mechanische Ausgestaltung verwendet dabei einen Schlitten 27, über welchen der Halter 25 entlang der Linearführung 26 verschiebbar ist, im Ausführungsbeispiel über Rollen. Bei der in Figur 2 gezeigten konkreten Ausgestaltung sind als Linearführung zwei Stäbe vorgesehen, auf welchen jeweils Rollen des Schlittens entlanglaufen. Weiterhin ist ein Griff 30 vorgesehen, über welchen der Halter gegriffen und verschoben werden kann.

Der Halter 25 ist im Ausführungsbeispiel federnd gelagert, und wird hierdurch gegen den Rohrabschnitt vorgespannt. Dies sorgt dafür, dass ein am Halter 25 angeordneter Schweißkopf über das Gleitelement 22 an den Rohrabschnitt gedrückt wird. Selbst bei einem unrunden Rohr oder einer nicht exakt fluchtenden Anordnung des Rohrabschnittes am Drehteller 1 wird hierdurch ein Anliegen des Gleitelementes 22 und hierdurch ein definierter Abstand zum Rohrabschnitt sichergestellt.

Die federnde Lagerung erlaubt bevorzugt eine Bewegung des Halters in einer Ebene, welche orthogonal zur Drehachse des Drehtellers 1 verläuft.

Im Ausführungsbeispiel, welches wiederum am besten in Figur 5 erkennbar ist, ist der Halter 25 über eine Linearachse 29 federbelastet an einem Halterarm 25 angeordnet, welcher wiederum an dem Schlitten 27 befestigt ist. Entlang der Linearführung wird der Halter 25 dabei über ein Federelement in Richtung auf den Rohrabschnitt vorgespannt. Bei dem Federelement kann es sich aber um eine Druckfeder handeln, wie dies in Figur 1 schematisch dargestellt ist, oder um eine Zugfeder. Alternativ zu einer federbelasteten Lagerung entlang einer Linearführung wäre auch eine Schwenklagerung denkbar.

Im Ausführungsbeispiel umfasst der Halter 25 eine Aufnahme für den Griff des Schweißkopfes 23, an welcher der Griff über einen Klemmbügel 38 lösbar befestigbar ist. Im Ausführungsbeispiel ist der Halter 25 neben dem Tragarm 35 angeordnet, um Platz für den zum Griff des Schweißkopfes laufenden Schlauchabschnitt zu bieten.

Die Portalanlage kann weiterhin eine oder mehrere höhenverstellbare Ablagen 20 aufweisen, über welche ein dem Drehteller abgewandtes Ende des Rohrabschnittes gestützt werden kann. Die Ablagen können beispielsweise zwei Räder aufweisen, auf welchen das Rohr aufliegt, oder eine V-förmige Ablagefläche, auf welcher das Rohr gleitet. Die Ablagen sind entlang der Drehachse des Drehtellers 1 an der Portalanlage angeordnet.

Bei dem in Figur 2 dargestellten Ausführungsbeispiel ist die Portalanlage auf einen Arbeitstisch 32 aufgebaut, an welchem auch das Modul M1 angeordnet und/oder lösbar anordenbar ist. Weiterhin sind im Ausführungsbeispiel unterhalb einer Arbeitsfläche Schränke 33 angeordnet.

Die erfindungsgemäße Rohrschweißvorrichtung kann weiterhin eine in Figur 1 schematisch dargestellte, ein drittes Modul M3 bildende Steuerung 16 aufweisen.

Die Steuerung 16 dient in der Grundausstattung zunächst der Ansteuerung des Motors 3 und damit zur Ansteuerung der Drehbewegung des Drehtellers 1.

Bevorzugt ist über die Steuerung 16 die Rotationsgeschwindigkeit des Drehtellers 1 einstellbar, insbesondere über ein entsprechendes Eingabeelement 17 der Steuerung 16, welches mit einer Steuerung für den Motor, beispielsweise einem Frequenzumrichter, zusammen wirkt.

Alternativ oder zusätzlich dient die Steuerung 16 dem Starten und Stoppen der Drehbewegung durch entsprechende Ansteuerung des Motors 3.

Die Ansteuerung kann über ein oder mehrere Eingabeelemente erfolgen, welche an der Steuerung angeordnet oder mit dieser verbunden sind. Insbesondere kann dabei ein Handgas oder Fußgas 45 vorgesehen sein, über welches die Drehbewegung gestartet und gestoppt werden kann. In einer möglichen Ausgestaltung erlaubt das Hand- oder Fußgas auch eine Ansteuerung der Drehgeschwindigkeit. Alternativ kann die Drehgeschwindigkeit separat vorgebbar sein.

Weiterhin kann die Steuerung 16 zumindest in einem Betriebsmodus den Drehteller 1 um einen definierten Drehwinkel drehen. Insbesondere erlaubt der Betriebsmodus dabei eine Drehbewegung des Drehtellers um einen Winkel von 360° bis 390°, beispielsweise um einen Winkel von 370°. Hierdurch wird eine umlaufende Schweißnaht mit einem gewissen Überlapp erzeugt.

Der Betriebsmodus sieht insbesondere vor, dass nach einem Start der Drehbewegung der Drehwinkel überwacht und die Drehung gestoppt wird, wenn der vorgegebene Drehwinkel erreicht wird. Der Drehwinkel kann dabei entweder fest in der Steuerung vorgegeben oder variabel vorgebbar sein.

In einer möglichen Ausgestaltung der vorliegenden Erfindung umfasst die Rohrschweißvorrichtung einen Drehgeber 19, über welchen eine Drehbewegung und/oder eine Drehposition des Drehtellers 1 erfasst werden kann. Dies kann entweder unmittelbar durch Erfassung einer Drehbewegung und/oder einer Drehposition der Welle 9 erfolgen, oder durch eine Erfassung der Drehposition und/oder des Drehwinkels des Motors 3.

In einer möglichen Ausgestaltung weist die Steuerung 16 der erfindungsgemäßen Rohrschweißvorrichtung ein Interface auf, über welches die Steuerung ein Schweißgerät ansteuern kann. Moderne Schweißgeräte weisen bereits entsprechende Interfaces auf, über welche diese extern angesteuert werden können.

In einer möglichen Ausgestaltung übernimmt die Steuerung 16 neben der Ansteuerung des Motors 3 auch die Ansteuerung des Schweißgerätes. Insbesondere kann das Schweißgerät durch die Steuerung zu Beginn des Schweißvorgangs eingeschaltet und nach Erzeugung der gewünschten Schweißnaht abgeschaltet werden. Alternativ oder zusätzlich kann auch die Stärke des Schweißstroms durch die Steuerung der Rohrschweißvorrichtung vorgebbar sein.

In einer möglichen Ausgestaltung umfasst die Steuerung 16 mehrere Schweißprogramme, welche beispielsweise unterschiedliche Drehgeschwindigkeiten und/oder unterschiedliche Schweißströme aufweisen, und/oder durch welche Schweißnähte unterschiedlicher Qualität hergestellt werden können, und/oder unterschiedliche Rohrdurchmesser geschweißt werden können. In Figur 1 sind schematisch Eingabeelemente 18 vorgesehen, welche eine Bedienung in der Steuerung 16 erlauben.

Die in Figur 1 als separates Modul M3 dargestellte Steuerung kann alternativ auch in das Modul M1 integriert sein.

Die erfindungsgemäße Rohrschweißvorrichtung ermöglicht die Erzeugung von Schweißnähten mit bisher unbekannter Qualität. Eine Nachbearbeitung der Schweißnähte auf der Innenseite des Rohres, wie sie bei konventionellen Schweißverfahren notwendig war, kann dabei in den meisten Fällen komplett entfallen. Weiterhin erlaubt die Rohrschweißvorrichtung ohne Zusatzaufwand auch das Verschwei-ßen von Edelstahlrohren.

Insbesondere erlaubt die erfindungsgemäße Schweißvorrichtung das Verschweißen von zwei Rohrelementen 41 und 42 entlang einer Schweißnaht 40, welche in Umfangsrichtung um die Rohrelemente herum verläuft.

In einer beispielshaften Anwendung können Rohrelemente zunächst entlang ihrer Trennfuge an einzelnen Stellen geheftet werden, um einen Rohrabschnitt zu bilden, welcher mit dem Drehteller 1 verbunden wird. Die Verbindung kann über einen Flanschabschnitt 43 erfolgen, welcher in einer möglichen Ausgestaltung ebenfalls mit einem der Rohrabschnitte 42 geheftet werden kann, oder bereits Teil des Rohrabschnittes sein kann.

Die erfindungsgemäße Rohrschweißvorrichtung kommt insbesondere in solchen Bereichen zum Einsatz, bei welchen eine besonders hohe Qualität der Schweißnaht notwendig ist, beispielsweise bei der Herstellung und/oder Instandhaltung von Produktionsanlagen im Bereich der Lebensmittelherstellung und/oder der Chemie.

## Patentansprüche

1. Rohrschweißvorrichtung mit einem Drehteller (1), an welchem ein zu schweißender Rohrabschnitt (2) ankoppelbar ist, und mit einem Motor (3) zum Antreiben des Drehtellers (1), wobei die Rohrschweißvorrichtung einen Masseanschluss (5) aufweist, welcher über einen Dreh-Abgriff (6) mit dem Drehteller (1) in Verbindung steht,
**dadurch gekennzeichnet,**
**dass** der Drehteller (1) eine Formiergas- und/oder Vakuumöffnung (10) aufweist, über welche das Innere eines mit dem Drehteller (1) gekoppelten Rohrabschnitts (2) mit Formiergas und/oder Vakuum beaufschlagbar ist.

2. Rohrschweißvorrichtung nach Anspruch 1, wobei der Drehteller (1) über eine Welle (9) drehbar gelagert ist, wobei die Welle (9) mit dem Motor (3) gekoppelt ist und von diesem angetrieben wird, und/oder wobei der Masseanschluss (5) eine Anschlussplatte umfasst, an welcher eine Masseklemme eines Schweißgerätes anklemmbar ist.

3. Rohrschweißvorrichtung nach Anspruch 2, wobei der Dreh-Abgriff (6) über die Welle (9) mit dem Drehteller (1) elektrisch leitend in Verbindung steht und/oder wobei der Dreh-Abgriff (6) einen an der Welle angeordneten, mit der Welle mitdrehenden Kontaktbereich (7), insbesondere in Form einer an der Welle angeordneten Scheibe (7), umfasst, welcher mit einem Gleitkontakt (8) zusammenwirkt, wobei der Gleitkontakt (8) bevorzugt federbelastet ist und/oder einen Kohlegleiter umfasst.

4. Rohrschweißvorrichtung nach einem der vorangegangenen Ansprüche, mit einer Drehdurchführung (15), über welche die Formiergas- und/oder Vakuumöffnung (10) des Drehtellers (1) mit einer Formiergas- und/oder Vakuumquelle (31) verbindbar ist, insbesondere über einen an einem, bevorzugt an einem statischen Element der Rohrschweißvorrichtung angeordneten Formiergas- und/oder Vakuumanschluss (11) der Rohrschweißvorrichtung.

5. Rohrschweißvorrichtung nach Anspruch 4, wobei der Drehteller (1) über eine Welle (9) drehbar gelagert ist, wobei die Drehdurchführung (15) über eine sich axial durch die Welle (9) erstreckende Bohrung (12) mit der Formiergas-und/oder Vakuumöffnung (10) des Drehtellers (1) in Verbindung steht und/oder in einem Lagerblock (37) der Welle (9) vorgesehen ist.

6. Rohrschweißvorrichtung nach einem der vorangegangenen Ansprüche, mit mindestens einem an dem Drehteller (1) anordenbaren oder den Drehteller (1) bildenden, auswechselbaren Adapter zum Ankoppeln eines Rohrabschnittes (2), wobei der Adapter bevorzugt mit einem Flansch des Rohrabschnittes (2) verschraubbar ist.

7. Rohrschweißvorrichtung nach einem der vorangegangenen Ansprüche, mit einer Steuerung (16) zur Ansteuerung Motors (3), über welche die Drehbewegung des Drehtellers (1) ansteuerbar ist, wobei bevorzugt eine Drehgeschwindigkeit des Drehtellers (1) schrittweise und/oder stufenlos einstellbar ist und/oder ein Fuss- und/oder Handeingabegerät (45) zum Bedienen der Steuerung (16) vorgesehen ist und/oder wobei die Steuerung (16) mehrere auswählbare Schweißprogramme umfasst.

8. Rohrschweißvorrichtung nach Anspruch 7, wobei die Steuerung (16) so ausgestaltet ist, dass sie in zumindest einem Betriebsmodus den Drehteller (1) zur Durchführung eines Schweißvorgangs um einen definierten Winkelbereich dreht, wobei die Steuerung (16) bevorzugt mit einem Drehgeber (19) in Verbindung steht, welcher eine Drehstellung des Drehtellers (1) erfasst und/oder wobei die Steuerung (16) bevorzugt ein mit der Rohrschweißvorrichtung zusammenwirkendes Schweißgerät ansteuert und insbesondere nach Beendigung des Schweißvorgangs stoppt.

9. Rohrschweißvorrichtung nach einem der vorangegangenen Ansprüche, mit einem Gleitelement (22), welches an einem Schweißkopf (23) eines mit der Rohrschweißvorrichtung zusammenwirkenden Schweißgerätes befestigbar ist und auf dem Rohrabschnitt (2) gleitet, um den Schweißkopf (23) in einem definierten Abstand zur Oberfläche des Rohrabschnitts zu halten.

10. Rohrschweißvorrichtung nach Anspruch 9, wobei es sich bei dem Gleitelement (22) um eine Hülse handelt, welche am Schweißkopf (23) befestigt ist und mit ihrer Vorderkante einen definierten Abstand des Schweißkopfes (23) zur Oberfläche des Rohrabschnittes (2) sicherstellt, wobei bevorzugt die Hülse (22) die Schweißdüse (36) des Schweißkopfes (23) umgreift und inbesondere durch Klemmung und/oder Formschluss auf dieser gehalten wird.

11. Rohrschweißvorrichtung nach einem der vorangegangenen Ansprüche, mit einer Portalanlage (M2) mit einem Halter (25) für einen Schweißkopf (23), dessen Position relativ zum Drehteller (1) einstellbar ist, wobei der Halter (25) bevorzugt federnd gelagert ist und den Schweißkopf (23) gegen einem am Drehteller (1) gekoppelten Rohrabschnitt (2) vorspannt.

12. Rohrschweißvorrichtung nach Anspruch 11, wobei der Halter (25) an der Portalanlage (M2) an einer Führung (26) in axialer Richtung verschiebbar angeordnet ist und/oder wobei die Portalanlage (M2) eine höhenverstellbare Ablage (20) aufweist, welche ein dem Drehteller (1) abgewandtes Ende des Rohrabschnitts (2) stützt.

13. Set aus einer Rohrschweißvorrichtung nach einem der vorangegangenen Ansprüche und einem Schweißgerät, insbesondere einem Lichtbogen-Schweißgerät.

14. Verfahren zum Schweißen eines Rohrabschnitts (2) unter Verwendung einer Rohrschweißvorrichtung nach einem der vorangegangenen Ansprüche und einem Schweißgerät, insbesondere einem Lichtbogen-Schweißgerät, mit den Schritten:
- Koppeln des Rohrabschnitts (2) an den Drehteller (1);
- Verbinden der Masse des Schweißgerätes mit dem Masseanschluss (5);
- Positionieren eines Schweißkopfes (23) des Schweißgerätes relativ zum Rohrabschnitt (2) und
- Drehen des Rohrabschnitts (2) mittels des Motors (3), während mittels des Schweißkopfes (23) eine sich in Umfangsrichtung des Rohrabschnitts (2) erstreckende Schweißnaht (40) erzeugt wird.

15. Verfahren nach Anspruch 14 zum Verschweißen zweier in axialer Richtung aneinander anschließender Rohrelemente (41, 42) mittels einer sich um den gesamten Umfang des Rohrabschnitts (2) erstreckenden Schweißnaht (40), wobei die beiden Rohrelemente (41, 42) bevorzugt vorab durch Schweißpunkte aneinander geheftet werden.

## Claims

1. Pipe welding device with a rotary table (1), to which a pipe section (2) to be welded can be coupled, and with a motor (3) for driving the rotary table (1), wherein the pipe welding device has a ground connection (5), which is connected by way of a rotary tap (6) to the rotary table (1),
**characterised in that**
the rotary table (1) comprises a forming gas and/or vacuum opening (10), via which the interior of a pipe section (2) coupled to the rotary table (1) can be acted upon by forming gas and/or vacuum.

2. Pipe welding device according to claim 1, wherein the rotary table (1) is supported rotatably via a shaft (9), wherein the shaft (9) is coupled to the motor (3) and is driven by this, and/or wherein the ground connection (5) comprises a connector plate, to which a ground terminal of a welding apparatus can be connected.

3. Pipe welding device according to claim 2, wherein the rotary tap (6) is connected via the shaft (9) to the rotary table (1) in an electrically conductive manner and/or wherein the rotary tap (6) comprises a contact region (7), in particular in the form of a disc (7) arranged on the shaft, which is arranged on the shaft and rotates with the shaft, which contact region interacts with a sliding contact (8), wherein the sliding contact (8) is preferably spring-loaded and/or comprises a carbon slide.

4. Pipe welding device according to any one of the preceding claims, with a rotary duct (15), via which the forming gas and/or vacuum opening (10) of the rotary table (1) can be connected to a forming gas and/or vacuum source (31), in particular by way of a forming gas and/or vacuum connection (11) of the pipe welding device arranged preferably on a static element of the pipe welding device.

5. Pipe welding device according to claim 4, wherein the rotary table (1) is supported rotatably via a shaft (9), wherein the rotary duct (15) is connected by way of a hole (12) extending axially through the shaft (9) to the forming gas and/or vacuum opening (10) of the rotary table (1) and/or is provided in a bearing block (37) of the shaft (9).

6. Pipe welding device according to any one of the preceding claims, with at least one interchangeable adapter, which can be arranged on the rotary table (1) or forms the rotary table (1), for coupling a pipe section (2), wherein the adapter can preferably be screwed to a flange of the pipe section (2).

7. Pipe welding device according to any one of the preceding claims, with a control (16) for activating the motor (3), by way of which control the rotary movement of the rotary table (1) can be activated, wherein preferably a rotary speed of the rotary table (1) can be set incrementally and/or infinitely variably and/or a foot and/or manual input apparatus (45) is provided for operating the control (16) and/or wherein the control (16) comprises a number of selectable welding programs.

8. Pipe welding device according to claim 7, wherein the control (16) is configured so that it rotates the rotary table (1) in at least one operating mode for executing a welding process about a defined angular range, wherein the control (16) is preferably connected to a rotary encoder (19), which detects a rotary position of the rotary table (1) and/or wherein the control (16) preferably activates a welding apparatus interacting with the pipe welding device and stops it in particular on termination of the welding process.

9. Pipe welding device according to any one of the preceding claims, with a sliding element (22), which can be attached to a welding head (23) of a welding apparatus interacting with the pipe welding device and slides on the pipe section (2) in order to hold the welding head (23) at a defined distance from the surface of the pipe section.

10. Pipe welding device according to claim 9, wherein the sliding element (22) is a sleeve, which is attached to the welding head (23) and with its front edge ensures a defined distance of the welding head (23) from the surface of the pipe section (2), wherein preferably the sleeve (22) encompasses the welding nozzle (36) of the welding head (23) and in particular is held on this by clamping and/or form fit.

11. Pipe welding device according to any one of the preceding claims, with a gantry system (M2) with a mount (25) for a welding head (23), the position of which is adjustable relative to the rotary table (1), wherein the mount (25) is preferably spring-mounted and preloads the welding head (23) against a pipe section (2) coupled to the rotary table (1).

12. Pipe welding device according to claim 11, wherein the mount (25) is arranged on the gantry system (M2) movably on a guide (26) in an axial direction and/or wherein the gantry system (M2) has a height-adjustable repository (20), which supports an end of the pipe section (2) facing away from the rotary table (1).

13. Set of a pipe welding device according to any one of the preceding claims and a welding apparatus, in particular an arc welding apparatus.

14. Method for welding a pipe section (2) using a pipe welding device according to any one of the preceding claims and a welding apparatus, in particular an arc welding apparatus, with the steps:
- coupling of the pipe section (2) to the rotary table (1);
- connection of the ground of the welding apparatus to the ground connection (5);
- positioning of a welding head (23) of the welding apparatus relative to the pipe section (2) and
- rotation of the pipe section (2) by means of the motor (3) while a weld seam (40) extending in the circumferential direction of the pipe section (2) is produced by means of the welding head (23).

15. Method according to claim 14 for welding two pipe elements (41, 42) connected to one another in an axial direction by means of a weld seam (40) extending around the entire circumference of the pipe section (2), wherein the two pipe elements (41, 42) are preferably tacked to one another beforehand by weld spots.

## Revendications

1. Dispositif de soudage de tuyaux comportant un plateau tournant (1), auquel un segment de tuyau (2) à souder peut être couplé, et comportant un moteur (3) destiné à entraîner le plateau tournant (1), le dispositif de soudage de tuyaux présentant une connexion à la masse (5), qui est reliée au plateau tournant (1) par le biais d'une prise rotative (6),
**caractérisé en ce que**
le plateau tournant (1) présente une ouverture pour gaz de formation et/ou application du vide (10), par le biais de laquelle l'intérieur d'un segment de tuyau (2) couplé au plateau tournant (1) peut être soumis à l'action d'un gaz de formation et/ou du vide.

2. Dispositif de soudage de tuyaux selon la revendication 1, dans lequel le plateau tournant (1) est monté rotatif par le biais d'un arbre (9), l'arbre (9) étant couplé au moteur (3) et entraîné par celui-ci, et/ou dans lequel la connexion à la masse (5) comprend une plaque de connexion à laquelle une borne de mise à la masse d'un appareil de soudage peut être branchée.

3. Dispositif de soudage de tuyaux selon la revendication 2, dans lequel la prise rotative (6) est reliée de manière électriquement conductrice au plateau tournant (1) par le biais de l'arbre (9) et/ou dans lequel la prise rotative (6) comprend une zone de contact (7) disposée sur l'arbre et tournant conjointement avec l'arbre, en particulier sous la forme d'un disque (7) disposé sur l'arbre, qui coopère avec un contact glissant (8), le contact glissant (8) étant de préférence sollicité par ressort et/ou comprenant un balai de carbone.

4. Dispositif de soudage de tuyaux selon l'une des revendications précédentes, comportant un passage tournant (15) par le biais duquel l'ouverture pour gaz de formation et/ou application du vide (10) du plateau tournant (1) peut être reliée à une source de gaz de formation et/ou de vide (31), en particulier par le biais d'un raccordement au gaz de formation et/ou au vide (11) du dispositif de soudage de tuyaux, disposé de préférence sur un élément statique du dispositif de soudage de tuyaux.

5. Dispositif de soudage de tuyaux selon la revendication 4, dans lequel le plateau tournant (1) est monté rotatif par le biais d'un arbre (9), le passage tournant (15) étant relié à l'ouverture pour gaz de formation et/ou application du vide (10) du plateau tournant (1) par le biais d'un trou (12) qui s'étend axialement à travers l'arbre (9) et/ou étant prévu dans un bloc palier (37) de l'arbre (9).

6. Dispositif de soudage de tuyaux selon l'une des revendications précédentes, comportant au moins un adaptateur échangeable, pouvant être disposé sur le plateau tournant (1) ou formant le plateau tournant (1), pour le couplage d'un segment de tuyau (2), l'adaptateur pouvant de préférence être vissé à une bride du segment de tuyau (2).

7. Dispositif de soudage de tuyaux selon l'une des revendications précédentes, comportant une commande (16) destinée à commander le moteur (3), par le biais de laquelle le mouvement rotatif du plateau tournant (1) peut être commandé, une vitesse de rotation du plateau tournant (1) pouvant de préférence être réglée par paliers et/ou sans paliers et/ou un appareil de saisie manuelle et/ou à commande au pied (45) étant prévu pour manoeuvrer la commande (16) et/ou la commande (16) comprenant plusieurs programmes de soudage sélectionnables.

8. Dispositif de soudage de tuyaux selon la revendication 7, dans lequel la commande (16) est réalisée de manière à, dans au moins un mode de fonctionnement, faire tourner le plateau tournant (1) selon une plage angulaire définie pour exécuter un processus de soudage, la commande (16) étant de préférence reliée à un codeur rotatif (19) qui détecte une position en rotation du plateau tournant (1) et/ou dans lequel la commande (16) commande de préférence un appareil de soudage coopérant avec le dispositif de soudage de tuyaux et l'arrête en particulier après que le processus de soudage est terminé.

9. Dispositif de soudage de tuyaux selon l'une des revendications précédentes, comportant un élément glissant (22) qui peut être fixé sur une tête de soudage (23) d'un appareil de soudage coopérant avec le dispositif de soudage de tuyaux et qui glisse sur le segment de tuyau (2) pour maintenir la tête de soudage (23) à une distance définie de la surface du segment de tuyau.

10. Dispositif de soudage de tuyaux selon la revendication 9, dans lequel l'élément glissant (22) est un manchon qui est fixé à la tête de soudage (23) et qui assure, avec son bord avant, une distance définie de la tête de soudage (23) par rapport à la surface du segment de tuyau (2), le manchon (22) entourant de préférence la buse de soudage (36) de la tête de soudage (23) et étant en particulier maintenu sur celle-ci par serrage et/ou par complémentarité de forme.

11. Dispositif de soudage de tuyaux selon l'une des revendications précédentes, comportant une installation de portique (M2) dotée d'un support (25) pour une tête de soudage (23), la position dudit support pouvant être réglée par rapport au plateau tournant (1), le support (25) étant de préférence monté sur ressort et exerçant une précontrainte sur la tête de soudage (23) l'amenant contre un segment de tuyau (2) couplé au plateau tournant (1).

12. Dispositif de soudage de tuyaux selon la revendication 11, dans lequel le support (25) est disposé, sur l'installation de portique (M2), de manière coulissante dans la direction axiale sur un guidage (26) et/ou dans lequel l'installation de portique (M2) présente un élément de dépôt (20) réglable en hauteur, qui soutient une extrémité du segment de tuyau (2) opposée au plateau tournant (1).

13. Ensemble constitué d'un dispositif de soudage de tuyaux selon l'une des revendications précédentes et d'un appareil de soudage, en particulier un appareil de soudage à l'arc.

14. Procédé de soudage d'un segment de tuyau (2) au moyen d'un dispositif de soudage de tuyaux selon l'une des revendications précédentes et d'un appareil de soudage, en particulier un appareil de soudage à l'arc, comportant les étapes :
- couplage du segment de tuyau (2) au plateau tournant (1) ;
- liaison de la masse de l'appareil de soudage à la connexion à la masse (5) ;
- positionnement d'une tête de soudage (23) de l'appareil de soudage par rapport au segment de tuyau (2) et
- rotation du segment de tuyau (2) au moyen du moteur (3), pendant qu'un cordon de soudure (40) s'étendant dans la direction circonférentielle du segment de tuyau (2) est généré au moyen de la tête de soudage (23).

15. Procédé selon la revendication 14 destiné au soudage de deux éléments de tuyau (41, 42) se succédant l'un l'autre dans la direction axiale, au moyen d'un cordon de soudure (40) s'étendant sur toute la circonférence du segment de tuyau (2), les deux éléments de tuyau (41, 42) étant de préférence auparavant attachés l'un à l'autre par des points de soudure.
